# EUROPEAN PATENT SPECIFICATION

(11) **EP 1 840 800 B1**
(45) Date of publication and mention of the grant of the patent: **03.08.2011**
(21) Application number: 07006034.8
(22) Date of filing: 23.03.2007
(51) Int. Cl.: G06K 15/00

(54) **Label-printing apparatus and label-printing program recorded on a computer readable recording medium**
Etikettendruckvorrichtung und auf einem computerlesbaren Aufzeichnungsmedium aufgezeichnetes Etikettendruckprogramm
Appareil d'impression d'étiquettes et programme d'impression d'étiquettes enregistré sur un support d'enregistrement lisible sur un ordinateur

(30) Priority: 29.03.2006 JP 2006090952
(43) Date of publication of application: 03.10.2007
(73) Proprietor: Brother Kogyo Kabushiki Kaisha, Nagoya-shi, Aichi-ken 467-8561 (JP)
(72) Inventor: Miyashita, Tomoki, Nagoya-shi, Aichi-ken 467-8562 (JP); Niwa, Akihiko, Nagoya-shi, Aichi-ken 467-8562 (JP); Tomomatsu, Yoshitsugu, Nagoya-shi, Aichi-ken 467-8562 (JP)
(74) Representative: Feldmeier, Jürgen

(56) References cited:
- US-A- 5 479 467
- US-A1- 2003 059 244

## Description

The invention relates to a label-printing apparatus and a label-printing program recorded on a computer readable recording medium. In particular, the invention relates to such a label-printing apparatus and label-printing program for printing a set of labels that constitute related sequential labels.

Generally, printing of a plurality of papers or labels by means of a printing apparatus may be sometimes undertaken in sets. If printing in sets is restarted once it has been interrupted for some reason, or reprinting is executed based on its history, a requirement may arise for not only printing a specified label but also for printing an entire set of labels. For example, an error may occur during execution of double-sided printing and afterwards, printing is restarted. In such circumstances a method has been proposed. In the method, when after printing of a front face has been completed in a normal manner, an interruption is caused by the occurrence of an error in the printing of the rear face, even when printing is recommended, care has to be taken to restart printing from the front face so as to avoid disturbing a relationship between the front and rear surfaces. See for example, Japanese Patent Application Laid-Open No. HEI 10-260806.

However, at times of reprinting also, a conventional printing apparatus of the type described above produces printing in sets constituted of two sides, a front face and a rear face. Accordingly, a printing apparatus of such a type cannot be applied in a case where, by means of specifying one among a set constituted by a plurality of labels, reprinting of all labels is desired.

The invention has been achieved to solve the above problem and an object is to provide a label-printing apparatus and a label-printing program that, even by the specification of one label, are capable of reprinting all labels of an entire set constituted by a plurality of labels.

This object is solved by the features according to claims 1 and the steps of claim 7. Further advantageous developments are subject-matter of the dependent claims.

The label printing device or label printer regards labels in sets made up of plural labels as objects for printing. After printed data about a previous printing and history of printing have been stored and the composite counted number of labels in a set has been set previously by change of setting processing, the history memory and the composite counted number of labels in a set can be referred to by executing printing of the labels in a set made up of that composite counted number, and a determination can be easily made as to which set any label among the printed labels belongs. Thus, if a history of printing is performed that is to be executed when it is desired that a printed label need to be reprinted for some reason, labels of the entire set to which that label belongs can be printed. In particular, this can be used preferably in cases where a display screen is small as in this embodiment and detailed information about the history and the labels that make up the set cannot be displayed easily on a list. Further, if the label paper 81 is set so as to be cut in cases of each individual set, each set can be identified easily. Further, because a mark indicating reprinting can be printed in the case of the history of printing, avoidance is possible of an inconvenience in which new printing gets mixed with labels which have already been reprinted.

The label-printing apparatus stores the history of printing the labels and the quantity of labels constituting the set of the labels and when an instruction for printing a history is input by a user, extracts the print data of the set of labels to which the label specified by the history of printing instructions belongs and prints it. Consequently, by specifying only a single label, the entire set of the labels which that label belongs to can be reprinted. As a result, specification on reprinting when labels intended to be used always in pair are to be printed does not become complicated, which is convenience for use.

Because in the label-printing apparatus, storing of the history is carried out in the order of printing and additionally, the quantity of the labels that make up the set thereof is stored, to which set a specified label belongs can be determined easily from the memory of the history and the quantity of the labels.

Further, the label-printing apparatus can select whether when the instructions for the history of printing is input, only a specified label is to be printed or the entire set of the labels to which that specified label belongs is to be printed. Consequently, if only the specified label is desired to be reprinted for some reason, printing of the entire set thereof can be avoided.

Because in the label-printing apparatus, after the set of the labels is printed, the labels are cut by each set, each set of the labels can be distinguished easily and therefore, the printed labels can be handled easily.

Further, in the label-printing apparatus, cutting of each label by unit can be selected if the set of the labels is desired to be cut by the unit of each label. Consequently, this label-printing apparatus can be used appropriately depending on each user's application.

In the label-printing apparatus, when the history is printed, the mark indicating the reprint is printed on a label or a mount of the label. Consequently, an error of using both a reprinted label and an original printed label at the same time can be prevented.

Exemplary embodiments will now be described in detail with reference to the accompanying drawings in which:
FIG. 1 is a schematic perspective view of a label printer according to the embodiment;
FIG. 2 is a perspective view showing a state in which a roll tape holder having a maximum roll tape width is loaded onto a label printer with its upper cover removed;
FIG. 3 is a side sectional view showing a state in which the roll tape holder is loaded onto the label printer with the upper cover removed;
FIG. 4 is a block diagram showing an electrical structure of the label printer;
FIG. 5 is a flowchart of a main routine of the label printer;
FIG. 6 is a flowchart of changes in setting processing to be executed during the main routine;
FIG. 7 is a flowchart of the history of printing processing to be executed during the main routine;
FIG. 8 is a flowchart of sets of labels selection processing to be executed during the history of printing processing;
FIG. 9 is a flowchart of ordinary printing processing to be executed during the main routine; and
FIG. 10 is an explanatory diagram showing an example of a label specifying screen.

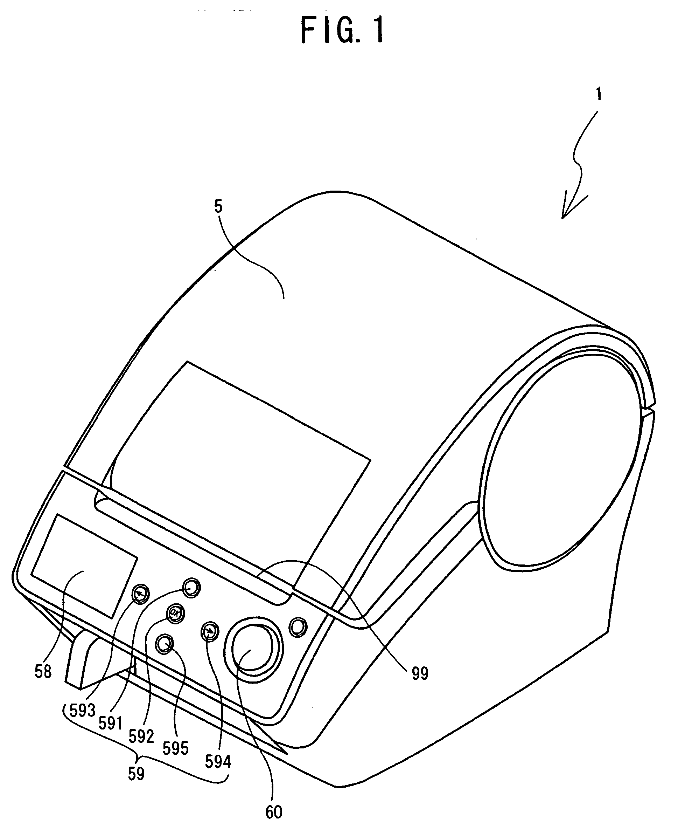

Hereinafter, the label printer 1 of the embodiment will be described with reference to the accompanying drawings. First, the structure of the label printer 1 will be explained with reference to FIGS. 1-4.

As shown in FIGS. 1-3, the label printer 1 includes a roll tape holder-accommodating portion 4 which accommodates a roll tape holder 3 in a rear portion of a main body casing 2 whose bottom face is formed in a substantially rectangular shape. The roll tape holder 3 is constituted by winding a label paper 81 having a predetermined width therearound. In the label paper 81, a plurality of labels are disposed on a mount on the tape evenly spaced apart and affixed to that mount. The label paper 81 is wound around the roll tape holder 3 with the surface to which the label is affixed (a front surface) facing inwards.

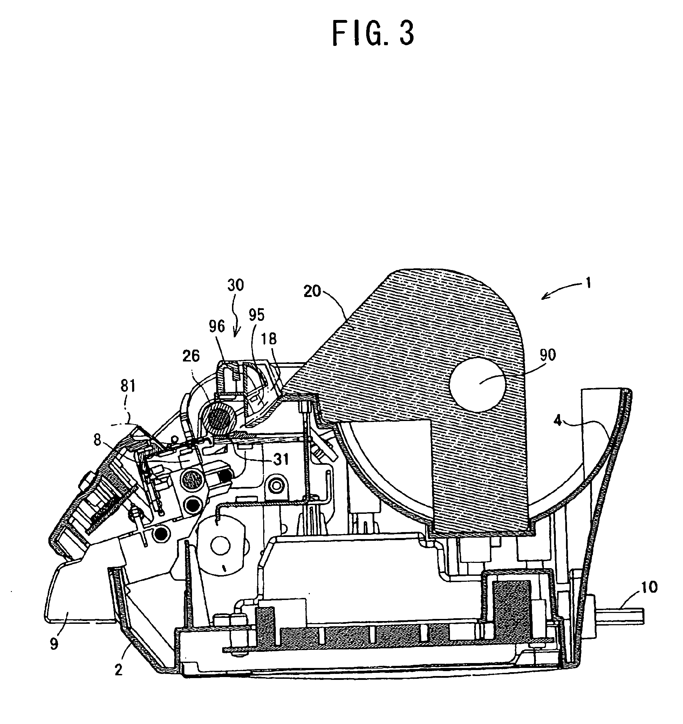

The label printer 1 further includes a printing mechanism 30 which stores a platen roller 26 and a thermal head 31 (see FIG. 3) on its front side. A transparent resin-made upper cover 5 is provided at an upper edge portion of the rear side in such a way that it can be opened/closed freely so as to cover the top of the roll tape holder-accommodating portion 4. Then, a cut lever 9 which controls movement of a cutter unit 8 in a sideways direction (see FIG. 3) is provided on the front face of the main body casing 2. A power button 60, a variety of input keys 59 for use in inputting printing instruction and a liquid crystal display 58 are provided on the front side of the top face of the main body casing 2.

In this context, the input keys 59 comprise a print key 591 for inputting printing instructions, a menu key 592 which displays and establishes a menu for a variety of settings, a forward-feeding key 593 and a backward-feeding key 594 for feeding respectively forwards and backwards, and a cancel key 595. A power cord 10 is connected to the rear face of the main body casing 2 and further, a connector portion (not shown) is provided that is made up of an item such as an universal serial bus (USB) which is to be connected to an item such as a personal computer (not shown).

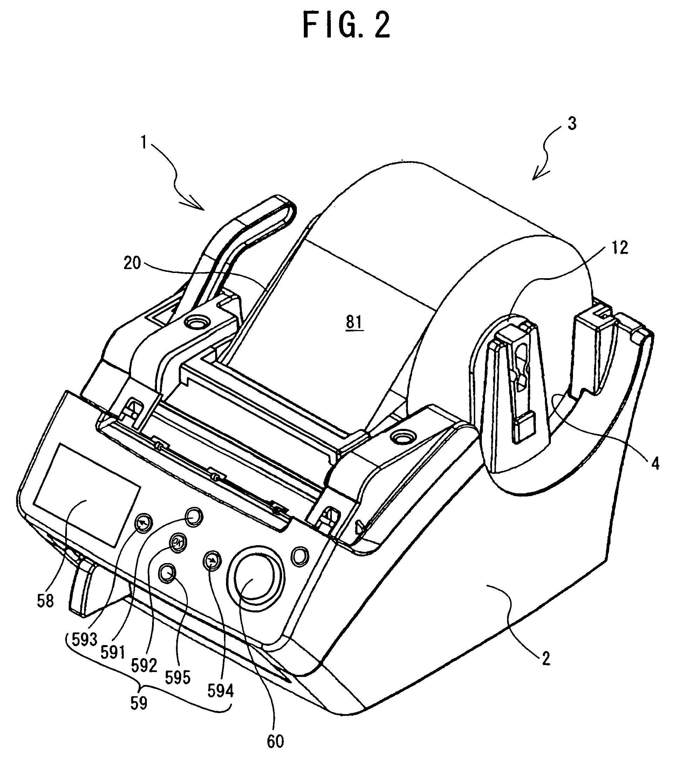

As shown in FIGS. 2, 3, the roll tape holder 3 is provided with a shaft member 90 (see FIG. 3) around which a label paper 81 is wound. A positioning holding member 12 made of thin sheet material is provided perpendicularly to the shaft member 90 at an end (right end in FIG. 2) of the shaft member 90. Further, a guide member 20 which is a thin sheet member is provided perpendicularly to the shaft member 90 at the other end (left end in FIG. 2) of the shaft member 90. The label paper 81 is wound around the shaft member 90 in such a way that the front surface of the mount faces inward. Moreover, the label paper 81 is nipped by the positioning holding member 12 and the guide member 20 so that its winding is never deflected.

As shown in FIG. 3, an end of the label paper 81 is inserted into the printing mechanism 30 from an insertion port 18 which is opened in a narrow shape in a right and left direction of the label printer 1 on the top of the printing mechanism 30. The label paper 81 inserted into the printing mechanism 30 from the insertion port 18 is scanned by an optical sensor 95 that is provided on a frame portion 96 so as to read a sensor mark printed on the rear face of the mount of the label paper 81. This sensor mark is used for identifying types of paper, such as the label paper 81, that is wound around the roll tape holder 3. More specifically, light from a light-emitting portion of the optical sensor 95 is irradiated onto the rear face of the label paper 81 and then its reflected light is received by a light-receiving portion of the optical sensor 95 that is made up of an item such as a photo transistor so as to detect the sensor mark.

The thermal head 31 and the platen roller 26 are provided downstream of the optical sensor 95 in a transportation direction of the label paper 81. This platen roller 26 is a substantially cylindrical roller provided in the right and left direction of the label printer 1. The thermal head 31 is a line-type thermal head which is provided in a right and left direction of the label printer 1 at a position opposite to the platen roller 26 so as to print in rows in a tape width direction (direction of a short side of the tape) of the label paper 81. Further, when printing takes place, the label paper 81 inserted into the insertion port 18 is pulled out from the roll tape holder 3 and transported by means of a rotation of the platen roller 26, and image data is printed successively on a print face by means of driving control on the part of the thermal head 31. Printed label paper 81 is further discharged from a discharge port 99 provided between the upper cover 5 and the main body casing 2, and cut out by the cutter unit 8.

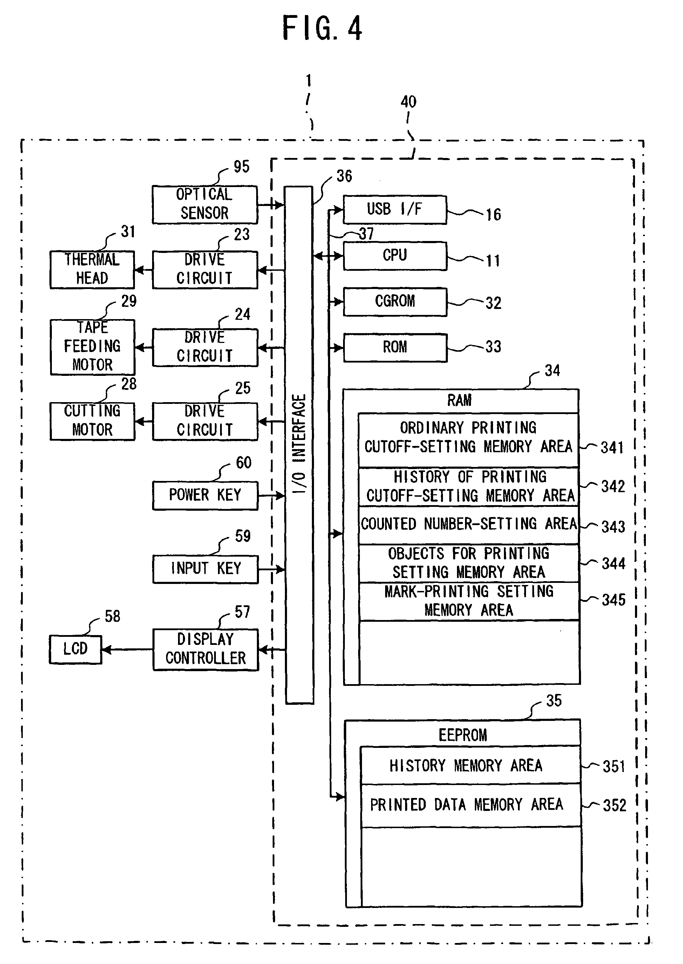

Next, the electronic structure of the label printer 1 will be described with reference to FIG. 4. The label printer 1 is provided with a main control board 40, and the main control board 40 includes a CPU 11 for conducting main control of the label printer 1. A CGROM 32, a ROM 33, a RAM 34, an USB interface 16, an EEPROM 35 and an I/O interface 36 are connected to the CPU 11 through a data bus 37. The CGROM 32 stores graphic data such as characters and symbols, and the ROM 33 stores the control program. The RAM 34 stores print data, other data, flags and like that received from a personal computer (not shown), and the EEPROM 35 stores the history of printing. Further, the USB interface 16 communicates with the personal computer.

In this context, the RAM 34 contains an ordinary printing cutoff-setting memory area 341, a history of printing cutoff-setting memory area 342, a counted number-setting memory area 343, printing object-setting memory area 344, mark printing setting memory area 345 and other memory areas (not shown). The ordinary printing cutoff-setting memory area 341 stores whether or not cutoff is to be executed for each label at a time of ordinary printing. The history of printing cutoff-setting memory area 342 stores whether or not cutoff is to be executed for each label at a time of making a history of printing. The counted number-setting area 343 stores the quantity of labels constituting a set. The printing object-setting memory area 344 stores whether only a specified label or an entire set belonging to the specified label is to be handled as a object for printing. The mark printing-setting memory area 345 stores whether or not printing a mark indicating reprinting is to be executed at the time of making a history of printing.

The EEPROM 35 includes a history memory area 351 for storing the history of printing and a printed data memory area 352 which stores data of printing that has been executed for the history of printing.

As shown in FIG. 4, an optical sensor 95, drive circuits 23, 24, 25, a power key 60, input keys 59 and a display controller 57 are connected to the I/O interface 36 of the label printer 1. The optical sensor 95 is accommodated in the roll tape holder-accommodating portion 4 in order to detect the type of tape. The drive circuit 23 drives the thermal head 31. The drive circuit 24 drives a tape feeding motor 29 for rotating the platen roller 26. The drive circuit 25 drives a cutting motor 28 for actuating the cutter unit 8 for purposes of cutting a tape. The power key 60 gives instructions for ON/OFF switching of the power. The plural input keys 59 are provided for inputting instructions for actions such as printing and reprinting. The display controller 57 controls a liquid crystal display 58.

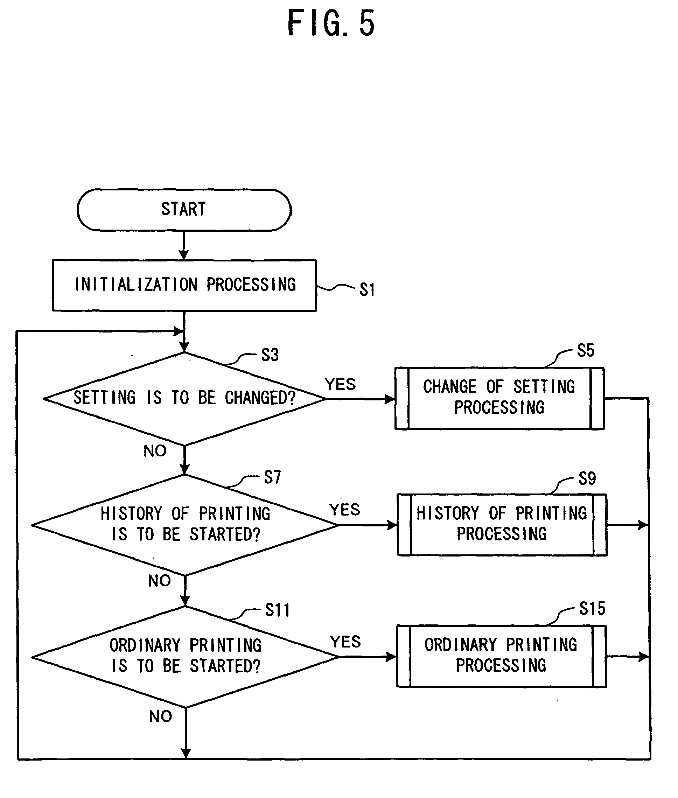

Next, operations of a label printer 1 with such a structure will be described with reference to FIGS. 5-10.

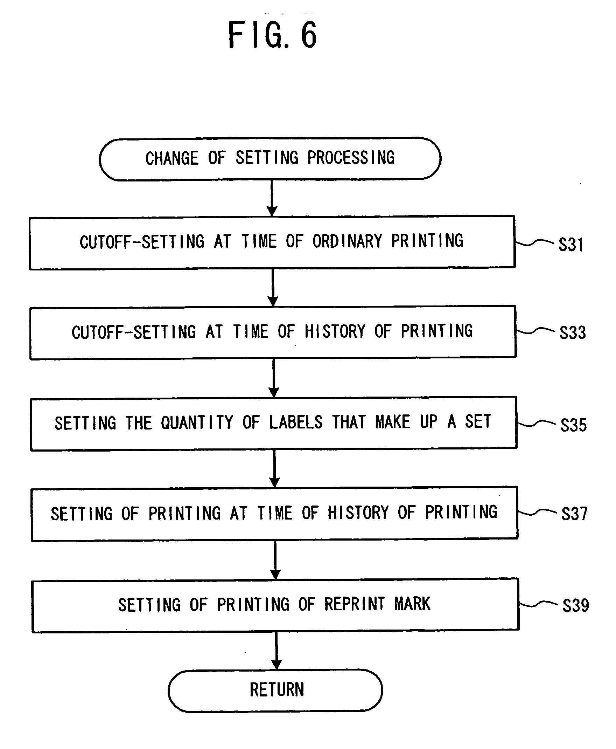

If the power of the label printer 1 is turned ON so that a main routine is started, a memory area of the RAM 37 is first deleted and initialization processing is executed for returning each setting value to a predetermined value (S1). Next, a determination is made as to whether or not instructions have been given for a change of setting (S3). If a change of setting has been carried out (S3: YES), change of setting processing for various settings is executed through a display on a setting screen (S5). Then, the processing returns to S3. Further, details of the change of setting processing will be described later with reference to FIG. 6.

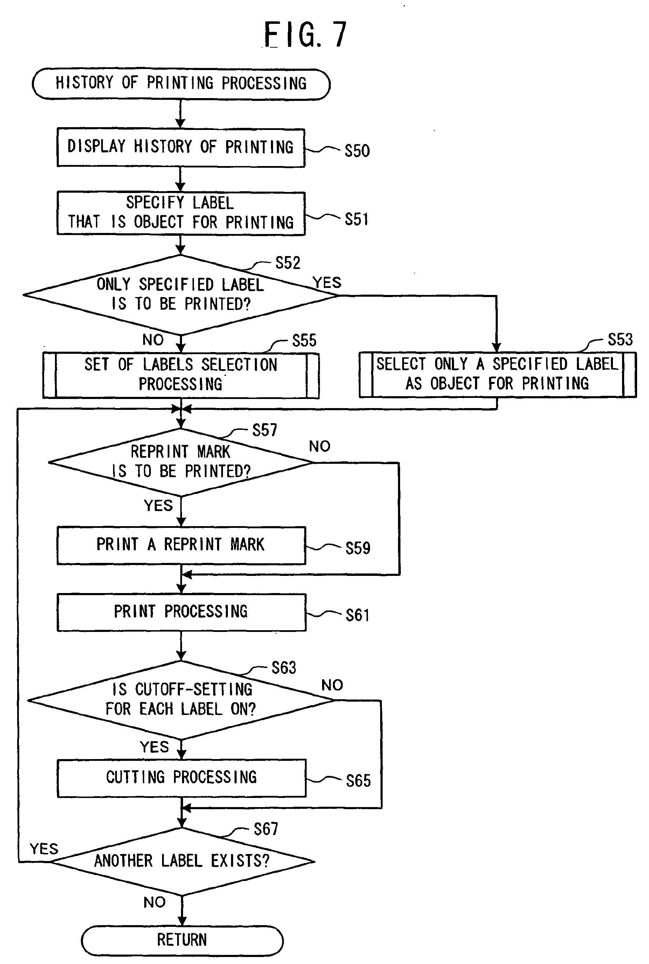

In circumstances where processing cannot be changed (S3: NO), a print key 591 is pressed and a determination is made as to whether or not instructions for the history of printing have been issued from a menu displayed on the liquid crystal display 58 (S7). In circumstances where the history of printing has been started (S7: YES), a specification of a label that it is desired to be printed is input by a user from the printed data whose history has been stored in the history memory area 351. Then a history of printing processing is executed for printing the specified label (S9) . Then, the processing returns to S3. Further, details of the history of printing processing will now be described later with reference to FIGS. 7, 8, and 10.

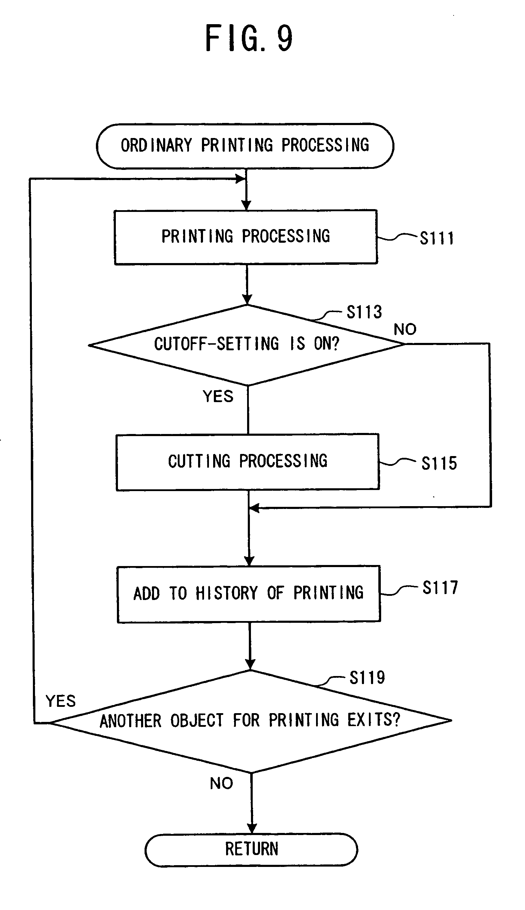

Unless the history of printing processing is about to start (S7: NO), the print key 591 is pressed and a determination is made as to whether or not instructions for start of ordinary printing have been executed from the menu (S11). If instructions for start of the ordinary printing have been executed (S11: YES), ordinary printing processing based on the new print data is executed (S15). Then, the processing returns to S3. Details of ordinary printing processing will also be described later with reference to FIG. 9. The label printer 1 executes processing of steps S3-S11 repeatedly while power is switched ON.

Next, the change of setting processing to be executed in the main routine will be described with reference to FIG. 6. If the menu key 592 is pressed so that a setting is selected from the menu displayed on the liquid crystal display 58, a variety of settings can be executed in succession. First if the ordinary printing processing is executed based on new print data, a setting is made as to whether or not cutoff is to be executed (cutoff-setting at times of ordinary printing ON/OFF) in units of individual labels (S31). For this purpose, an ON or OFF indication may be changed over by means of the forward feed key 593 or the backward feed key 594 so as to establish either one of them by means of the menu key 592. A setting content input in this way is stored in the ordinary printing cutoff-setting memory area 341.

Next in the case of the history of printing involving a label specified from print data of printing that has already taken place, a setting is made as to whether or not a cutoff should be executed for each label (history of printing cutoff-setting ON/OFF) (S33). As in the case of the ordinary printing setting, a setting menu is displayed on the liquid crystal display 58 and then, input may be carried out with the forward feed key 593, the backward key 594 or the menu key 592. A setting content that has been input in this way is stored in the history of printing cutoff-setting memory area 342 within the RAM 34. In this embodiment, a setting is made as to whether or not a cutoff is required in units of individual labels within a set because a cutoff is always executed in units of a set. However, it is also permissible to make a setting as to whether or not a cutoff should be executed in units of a set.

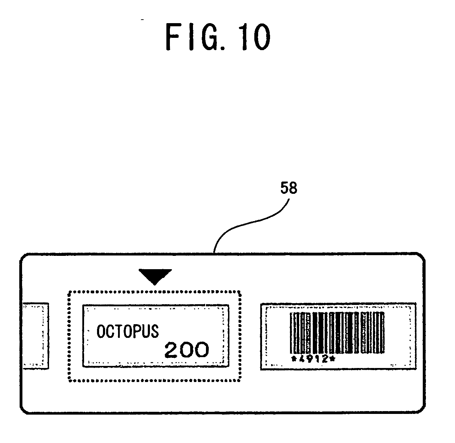

Next, a setting is made for the quantity of labels that should constitute a set (S35). In this embodiment, as assumption is made of a case in which printing is performed of a plurality of sets of labels made up of sets. For example, as shown in FIG. 10, in this configuration one set is made up of two labels in each of which a product name and a bar code are printed, and 30 such sets are printed. In these circumstances, by setting in advance the quantity of labels that are to form a set, a determination can be made as to which set a certain label belongs to from simple history information even when special data indicating to which set data belongs or special data indicating that two labels belong to the same set is not stored. For example, in the example that has just been quoted, "2" is the quantity of labels that make up a set. In this case also, the setting menu is displayed on the liquid crystal display 58 and input is performed with the forward feed key 593, the backward feed key 594 or the menu key 592. A setting content input in this way is stored in the counted number-setting area 343 within the RAM 34.

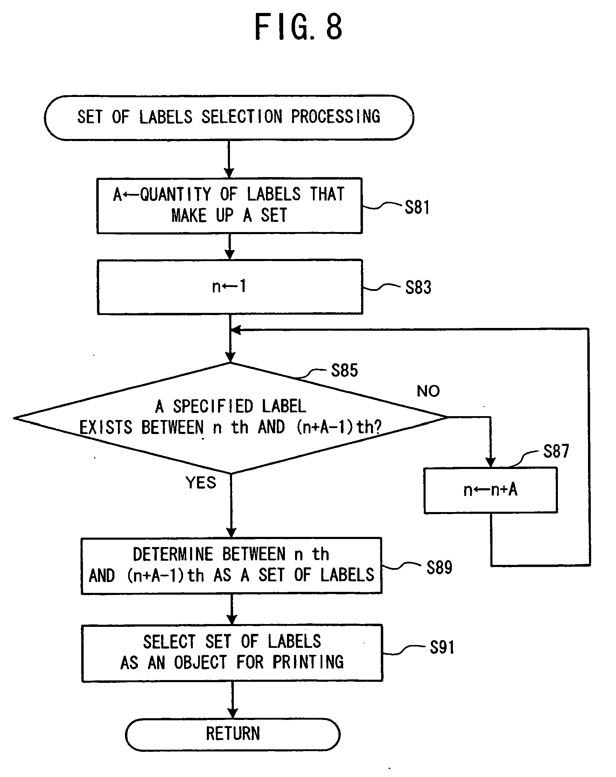

Next, in circumstances where instructions are given for the history of printing, a setting is made as to whether only a specified label is to be printed or whether an entire set to which the specified label belongs is to be printed (S37). In instructions for the history of printing, a preview of printed data whose history is stored is displayed on the liquid crystal display 58, as shown in FIG. 10, and a label that it is desired to be printed is specified by means of the forward feed key 593, the backward feed key 594 or the menu key 592. Because a set is made up of plural labels that have been set at the time of setting the counted number, all labels belonging to the set can automatically be regarded as an object for printing (see description of FIG. 8, which will be described later), or alternatively only a specified label can be printed. Either of such settings can be performed in the course of this step. Printing of the entirety of labels in a set, or printing of only a specified label, is stored in the printing object-setting memory area 344 within the RAM 34 according to the setting content.

Next, if instructions are given for the history of printing, a setting is made as to whether or not a mark is to be printed that indicates that the print is for the history of printing (reprint) (S39). If, for example, there is only space enough for the mark to be printed on the mount of the label paper 81, the reprint mark may be printed there, or, alternatively it is possible for only the reprint mark to be printed onto a label before an object label is printed, and for appropriate printing to be selected. A setting content here is stored in the mark printing setting memory area 345 within the RAM 34. The various settings are completed in the course of procedure described above and thus, the change of setting is completed and the processing returns to the main routine.

Next, the history of printing processing to be executed in the main routine will be described with reference to FIG. 7. If the history of printing processing is started, the history of printing is first displayed in a preview form on the liquid crystal display 58 (S50). Specification of a label that it is desired to be printed can be stipulated by means of the forward feed key 593, the backward feed key 594 or the menu key 592 (S51) .

Next, the printing object-setting memory area 344 is referred to so that a determination is made between a setting of printing only a specified label and a setting of printing all labels in a set to which the specified label belongs (S52). If only a specified label needs to be printed (S52: YES), only a label specified in S51 is selected as an object for printing (S53).

If, on the other hand, a setting of printing all the labels to which the specified label belongs is selected (S52: NO), a set of labels selection processing is executed so as to select a set to which the specified label belongs (S55: YES) . Details of the set of labels selection processing will be described later with reference to FIG. 8.

If an object for printing is selected in S53 and S55, the mark printing setting memory area 345 is next referred to so as to determine whether or not a reprint mark is to be printed (S57). If the reprint mark is not to be printed (S57: NO), the processing proceeds directly to S61. If the reprint mark is to be printed (S57: YES), the reprint mark is printed on the label or on the mount (S59) and then, processing of printing for a label that is an object for printing is executed (S61).

Next, the history of printing cutoff setting memory area 342 is referred to so as to make a determination as to whether or not cutoff setting is intended in units of individual labels (S63). If the cutoff-setting is OFF (S63: NO), the processing proceeds to S67 directly. If the cutoff-setting is ON (S63: YES), the label paper 81 is cut off by means of the cutter unit 8 (S65).

Next, a determination is made as to whether or not a subsequent label exists which is an object for printing is determined (S67). If such a subsequent label exists (S67: YES), the processing returns to S57, and the processing described above is repeated. If a subsequent label does not exist (S67: NO), the processing returns to the main routine.

Next, the sets of labels selection processing to be executed in the history of printing processing will be described with reference to FIG. 8. When the set of labels selection processing is started, first, the counted number-setting memory area 343 is referred to and the quantity of labels that should make up a set is set as composite counted number count A (S81). Next, 1 is set as a label n that is to be the object of processing (S83). A determination is made as to whether or not a specified label between n th and (n+A-1) th labels has been stored in the history memory area 351 (S85). For example, when the composite counted number A is 3 and n is 1, (n+A-1) is 3. Thus, a determination is made as to whether or not a specified label falls within the history of between the first and the third labels.

If no specified label exists between n th and (n+A-1) th, n+A is set to n because the object of printing is being transferred to a head label of the following set (S87). For example, because in the above example, A is 3 and n is 1, the following n is 4. Therefore, a determination is made as to whether or not any specified label exists in a set made up of a history of between the fourth and the sixth labels in following S85.

If any specified label is found among those between n th and (n+A-1) th, a determination is made that a label found between n th and (n+A-1) th is of a set to which the specified label belongs (S89). Further, the labels of a set determined in S89 are selected as objects for printing (S91). Then, the processing returns to the history of printing processing. To which set labels specified in S51 in FIG. 7 belong can be determined easily from the history of printing and the quantity of the labels that make up the set, and all labels belonging to that set can be regarded as objects for printing.

Next, ordinary printing processing that is executed in the main routine will be described with reference to FIG. 9. When ordinary printing processing is started, printing is performed on label paper 81 according to a known method based on specified print data (S111). Then, the ordinary printing cutoff-setting memory area 341 is now referred to and a determination is made as to whether or not cutoff setting has been made for purposes of cutting each label at the time of ordinary printing (S113). If the cutoff-setting is ON (S113: YES), cutting processing is executed for cutting off the label paper 81 together with the mount at the back of a printed label (S115) by the cutter unit 8. If the cutoff-setting is OFF (S113: NO), the processing proceeds to S117 directly.

Next, the history of a label the printing of which has been executed is stored in the history memory area 351 (S117). Printed data may be stored in the history memory area 351 as history, or, alternatively only the history of the execution of printing may be stored in the history memory area 351 with provision also made for reference being made possible to the printed data stored in the printed data memory area 352.

When specified objects for printing are provided in plural sets, a determination is made as to whether or not a subsequent object for printing exists (S119). Then, if a subsequent object for printing does exist (S119: YES), the processing returns to S111, and the processing described above is repeated. If, on the other hand, a subsequent object for printing does not exist (S119: NO) , the processing returns to the main routine directly.

In the illustrated embodiment, the controller (CPU11) preferably is implemented using a suitably programmed general purpose computer, e.g., a microprocessor, microcontroller or other processor device (CPU or MPU). It will be appreciated by those skilled in the art, that the controller also can be implemented as a single special purpose integrated circuit (e. g. , ASIC) having a main or central processor section for overall, system-level control, and separate sections dedicated to performing various different specific computations, functions and other processes under control of the central processor section. The controller also can be implemented using a plurality of separate dedicated or programmable integrated or other electronic circuits or devices (e.g., hardwired electronic or logic circuits such as discrete element circuits, or programmable logic devices such as PLDs, PLAs, PALs or the like). The controller also can be implemented using a suitably programmed general purpose computer in conjunction with one or more peripheral (e.g., integrated circuit) data and signal processing devices. In general, any device or assembly of devices on which a finite state machine capable of implementing the described procedures can be used as the controller,

## Claims

1. A label-printing apparatus (1) comprising:
a printing device that is adapted to print a set of labels that constitute related sequential labels;
a history memory device (351) that is adapted to store a history of the printing of the labels;
a printed data memory device (352) that is adapted to store print data of printed labels whose history is stored in the history memory device (351);
a counted number memory device (343) that is adapted to store the quantity of labels that make up a set of the labels;
a history printing instructions input device (59) that is adapted to receive history printing instructions for reprinting by specifying a label stored in the history memory device (351);
a label-extracting device (11) that is adapted to extract a set of labels to which belongs the specified label specified by the history printing instructions received by the history printing instructions input device (59) by referring to a counted number stored in the counted number memory device (343) and the history stored in the history memory device (351) ; and
a set of labels printing control device (11) that is adapted to control so as to read the print data of the set of labels, the print data extracted by the label-extracting device (11) from the print data memory device (352) and to print the print data by the printing device.

2. The label-printing apparatus (1) according to claim 1 wherein the label-extracting device (11) includes a set of labels-determining device (11) that is adapted to gather together labels, whose history has been stored in the order of printing by the history memory device (351) in sets of each quantity stored in the counted number memory device (343), and is adapted to determine each set of labels that has been gathered together as a set of labels; and the label-extracting device (11) is adapted to extract the set of labels to which the specified label belongs from among the sets of labels determined by the set of labels-determining device (11).

3. The label-printing apparatus (1) according to claim 1 or 2, further comprising
an object printing selection device (11) that, if a history printing instruction is received by the history printing instructions input device (59), is adapted to select printing of only the specified label or printing of the entirety of the set of labels to which the specified label belongs, wherein the label-extracting device (11), if printing of only the specified label is selected by the object printing selection device (11), is adapted to extract only the specified label and, if printing of the entirety of the set of labels to which the specified label belongs is selected, is adapted to extract the set of labels to which the specified label belongs.

4. The label-printing apparatus (1) according to any one of claims 1 to 3, further comprising:
a cutting device (8) that is adapted to cut a label printed by the printing device and
a cutting control device (11) that is adapted to cut out the labels that make up a set in units of sets of labels by means of the cutting device (8) when the set of labels is printed.

5. The label-printing apparatus according to-claim 4 further comprising:
an object cutting selection device (11) that is adapted to select whether or not to cut each of the labels that make up the set of labels printed by the printing device, wherein the cutting control device (8) is adapted to cut each label by means of the cutting device (8) when printing of each label is selected by the object cutting selection device (11).

6. The label-printing apparatus (1) according to any one of claims 1 to 5, further comprising:
a reprint mark-printing control device (11) that is adapted to control the printing device so as to print a mark indicating a reprint when a history of printing instructions is input by the history of printing instructions input device (59).

7. A label-printing program recorded in a computer readable recording medium, the program when run on a printer computer performs the following steps:
a history-storing step of storing a history of the printing of a set of labels that constitute related sequential labels;
a printed data-storing step of storing print data of printed labels whose history is stored in the history-storing step;
a counted number-storing step of storing the quantity of labels that make up a set of the labels;
a history printing instructions input step of receiving history printing instructions for reprinting by specifying a label stored in the history-storing step;
a label-extracting step of extracting a set of labels to which belongs the specified label specified by the history printing instructions received in the history printing instructions input step by referring to a counted number stored in the counted number-storing step and the history stored in the history-storing step; and
a set of labels printing control step of controlling so as to read the print data of the set of labels which is extracted in the label-extracting step and to control printing of the print data.

8. The label-printing program according to claim 7 wherein the label-extracting step includes
a set of labels-determining step of gathering together labels, whose history has been stored in the order of printing in the history-storing step in sets of each quantity that have respectively been stored in the counted number-storing step, and of determining each set of labels that has been gathered together as a set of labels; and the label-extracting step extracts the set of labels to which the specified label belongs from among the sets of labels determined in the sets of labels-determining step.

9. The label-printing program according to claim 7 or 8, further comprising:
an object printing selection step of selecting printing of only the specified label or printing of the entirety of the set of labels to which the specified label belongs, if a history of printing instructions is received in the history of printing instructions input step wherein
the label-extracting step, if printing of only the specified label is selected in the objects for printing selection step, extracts only the specified label and, if printing of the entirety of the set of labels to which the specified label belongs is selected in the objects for printing selection step, extracts the set of labels to which the specified label belongs.

10. The label-printing program according to any one of claims 7 to 9, further comprising:
a cutting control step of cutting a label printed in the set of labels printing control step and,
cutting out the labels that make up a set in units of sets of labels when a set of labels is printed.

11. The label-printing program according to claim 10 further comprising:
an object cutting selection step of selecting whether or not to cut each of the labels that make up the set of labels printed in the set of labels printing control step, wherein
the cutting control step cuts each label when printing of each label is selected in the objects cutting selection step.

12. The label-printing program according to any one of claims 7 to 11, further comprising:
a reprint mark printing control step of controlling so as to print a mark indicating a reprint in the set of labels printing control step when a history of printing instructions is input in the history of printing instructions input step.

## Patentansprüche

1. Etikettendruckgerät (1) mit:
einer Druckvorrichtung, die daran angepasst ist, einen Etikettensatz zu drucken, der aufeinander folgende Etiketten bildet;
einer Historienspeichervorrichtung (351), die daran angepasst ist, eine Historie des Druckens der Etiketten zu speichern;
einer Druckdatenspeichervorrichtung (352), die daran angepasst ist, Druckdaten von gedruckten Etiketten zu speichern, deren Historie in der Historienspeichervorrichtung (351) gespeichert ist;
einer Zählerspeichervorrichtung (343), die daran angepasst ist, die Menge der Etiketten zu speichern, die einen Satz der Etiketten bildet;
einer Historiendruckbefehlseingabevorrichtung (59), die daran angepasst ist, Historiendruckbefehle zum Neudrucken aufzunehmen, indem ein Etikett spezifiziert wird, das in der Historienspeichervorrichtung (351) gespeichert wird;
einer Etikettenextrahiervorrichtung (11), die daran angepasst ist, einen Etikettensatz zu extrahieren, zu dem das spezifizierte Etikett gehört, das durch die Historiendruckbefehle spezifiziert wird, die durch die Historiendruckbefehlseingabevorrichtung (59) aufgenommen werden, indem auf einen in der Zählerspeichervorrichtung (343) gespeicherten Zähler und auf die in der Historienspeichervorrichtung (351) gespeicherte Historie Bezug genommen wird; und
einer Etikettensatzdrucksteuervorrichtung (11), die für eine derartige Steuerung angepasst ist, dass die Druckdaten des Etikettensatzes gelesen werden, wobei die Druckdaten durch die Etikettenextrahiervorrichtung (11) von der Druckdatenspeichervorrichtung (352) extrahiert werden, und dass die Druckdaten durch die Druckvorrichtung gedruckt werden.

2. Etikettendruckgerät (1) gemäß Anspruch 1, wobei die Etikettenextrahiervorrichtung (11) eine Etikettensatzbestimmungsvorrichtung (11) aufweist, die daran angepasst ist, Etiketten, deren Historie in der Druckreihenfolge durch die Historienspeichervorrichtung (351) gespeichert wurde, zusammen in Sätzen einer jeweiligen Menge zu entnehmen, die in der Zählerspeichervorrichtung (343) gespeichert ist, und die daran angepasst ist, jeden Satz der Etiketten zu bestimmen, die zusammen als ein Etikettensatz entnommen wurden; und wobei die Etikettenextrahiervorrichtung (11) daran angepasst ist, den Etikettensatz zu extrahieren, zu dem das spezifizierte Etikett gehört, und zwar von den Etikettensätzen, die durch die Etikettensatzbestimmungsvorrichtung (11) bestimmt sind.

3. Etikettendruckgerät (1) gemäß Anspruch 1 oder 2, des Weiteren mit
einer Objektdruckauswahlvorrichtung (11), die daran angepasst ist, nur das Drucken des spezifizierten Etiketts oder das Drucken der gesamten Etikettensätze auszuwählen, zu denen das spezifizierte Etikett gehört, falls ein Historiendruckbefehl durch die Historiendruckbefehlseingabevorrichtung (59) aufgenommen wird; wobei die Etikettenextrahiervorrichtung (11) daran angepasst ist, nur das spezifizierte Etikett zu extrahieren, falls nur das Drucken des spezifizierten Etiketts durch die Objektdruckauswahlvorrichtung (11) ausgewählt wird; und wobei sie daran angepasst ist, den Etikettensatz zu extrahieren, zu dem das spezifizierte Etikett gehört, falls das Drucken der gesamten Etikettensätze ausgewählt wird, zu denen das spezifizierte Etikett gehört.

4. Etikettendruckgerät (1) gemäß einem der Ansprüche 1 bis 3, des Weiteren mit:
einer Schneidvorrichtung (8), die daran angepasst ist, ein durch die Druckvorrichtung gedrucktes Etikett zu schneiden, und
einer Schneidsteuervorrichtung (11), die daran angepasst ist, die Etiketten, die einen Satz bilden, in Einheiten von Etikettensätzen mittels der Schneidvorrichtung (8) auszuschneiden, wenn der Etikettensatz gedruckt wird.

5. Etikettendruckgerät (1) gemäß Anspruch 4, des Weiteren mit:
einer Objektschneidauswahlvorrichtung (11), die daran angepasst ist, auszuwählen, ob jedes des Etiketten geschnitten wird oder nicht, das den Etikettensatz bildet, der durch die Druckvorrichtung gedruckt wird, wobei die Schneidsteuervorrichtung (8) daran angepasst ist, jedes Etikett mittels der Schneidvorrichtung (8) zu schneiden, wenn das Drucken von jedem Etikett durch die Objektschneidauswahlvorrichtung (11) ausgewählt wird.

6. Etikettendruckgerät (1) gemäß einem der Ansprüche 1 bis 5, des Weiteren mit:
einer Neudruckmarkierungsdrucksteuervorrichtung (11), die daran angepasst ist, die Druckvorrichtung so zu steuern, dass eine Markierung gedruckt wird, die einen Neudruck angibt, wenn eine Historie von Druckbefehlen durch die Historiendruckbefehlseingabevorrichtung (59) eingegeben wird.

7. Etikettendruckprogramm, das in einem computerlesbaren Aufzeichnungsmedium aufgezeichnet ist, wobei das Programm die folgenden Schritte durchführt, wenn es auf einem Druckercomputer läuft:
einen Historienspeicherschritt zum Speichern einer Historie des Druckens eines Etikettensatzes, der aufeinander folgende Etiketten bildet;
einen Druckdatenspeicherschritt zum Speichern von Druckdaten von gedruckten Etiketten, deren Historie bei dem Historienspeicherschritt gespeichert wird;
einen Zählerspeicherschritt zum Speichern der Menge der Etiketten, die einen Satz der Etiketten bilden;
einen Historiendruckbefehlseingabeschritt zum Aufnehmen von Historiendruckbefehlen zum Neudrucken, indem ein Etikett spezifiziert wird, das bei dem Historienspeicherschritt gespeichert wird;
einen Etikettenextrahierschritt zum Extrahieren eines Etikettensatzes, zu dem das spezifizierte Etikett gehört, das durch die Historiendruckbefehle spezifiziert wird, die bei dem Historiendruckbefehlseingabeschritt aufgenommen werden, indem auf einen bei dem Zählerspeicherschritt gespeicherten Zähler und auf die bei dem Historienspeicherschritt gespeicherte Historie Bezug genommen wird; und
einen Etikettensatzdrucksteuerschritt für eine derartige Steuerung, dass die Druckdaten des Etikettensatzes gelesen werden, die bei dem Etikettenextrahierschritt extrahiert werden, und dass das Drucken der Druckdaten gesteuert wird.

8. Etikettendruckprogramm gemäß Anspruch 7, wobei der Etikettenextrahierschritt Folgendes aufweist:
einen Etikettensatzbestimmungsschritt, um Etiketten zusammen zu entnehmen, deren Historie in der Druckreihenfolgen bei dem Historienspeicherschritt in Sätzen einer jeweiligen Menge gespeichert wurde, die jeweils bei dem Zählerspeicherschritt gespeichert wurde, und um den jeweiligen Satz der Etiketten zu bestimmen, die zusammen als ein Etikettensatz entnommen wurde;
und der Etikettenextrahierschritt extrahiert den Etikettensatz, zu dem das spezifizierte Etikett gehört, und zwar von den Etikettensätzen, die bei dem Etikettensatzbestimmungsschritt bestimmt werden.

9. Etikettendruckprogramm gemäß Anspruch 7 oder 8, des Weiteren mit:
einem Objektdruckauswahlschritt zum Auswählen eine Druckens nur des spezifizierten Etiketts oder des Druckens des gesamten Etikettensatzes, zu dem das spezifizierte Etikett gehört, falls Historiendruckbefehle bei dem Historiendruckbefehlseingabeschritt aufgenommen werden, wobei
der Etikettenextrahierschritt nur das spezifizierte Etikett extrahiert, falls das Drucken nur des spezifizierten Etiketts bei dem Objektdruckauswahlschritt ausgewählt wird, und den Etikettensatz extrahiert, zu denen das spezifizierte Etikett gehört, falls das Drucken des gesamten Etikettensatzes, zu dem das spezifizierte Etikett gehört, bei dem Objektdruckauswahlschritt ausgewählt wird.

10. Etikettendruckprogramm gemäß einem der Ansprüche 7 bis 9, des Weiteren mit:
einem Schneidsteuerschritt zum Schneiden eines Etiketts, das bei dem Etikettensatzdrucksteuerschritt gedruckt wird, und
Ausschneiden der Etiketten, die einen Satz bilden, in Einheiten von Etikettensätzen, wenn ein Etikettensatz gedruckt wird.

11. Etikettendruckprogramm gemäß Anspruch 10, des Weiteren mit:
einem Objektschneidauswahlschritt zum Auswählen, ob jedes der Etiketten geschnitten wird oder nicht, das den Etikettensatz bildet, der bei dem Etikettensatzdrucksteuerschritt gedruckt wird, wobei
der Schneidsteuerschritt jedes Etikett schneidet, wenn das Drucken von jedem Etikett bei dem Objektschneidauswahlschritt ausgewählt wird.

12. Etikettendruckprogramm gemäß einem der Ansprüche 7 bis 11, des Weiteren mit:
einem Neudruckmarkierungsdrucksteuerschritt für eine derartige Steuerung, dass eine Markierung gedruckt wird, die einen Neudruck bei dem Etikettensatzdrucksteuerschritt angibt, wenn Historiendruckbefehle bei dem Historiendruckbefehlseingabeschritt eingegeben werden.

## Revendications

1. Appareil d'impression d'étiquette (1) comprenant :
un dispositif d'impression qui est adapté pour imprimer un ensemble d'étiquettes qui constituent des étiquettes séquentielles relatives ;
un dispositif de mémoire d'historique (351) qui est adapté pour mémoriser un historique de l'impression des étiquettes ;
un dispositif de mémoire de données imprimées (352) qui est adapté pour mémoriser des données d'impression des étiquettes imprimées dont l'historique est mémorisé dans le dispositif de mémoire d'historique (351) ;
un dispositif de mémoire de nombre compté (343) qui est adapté pour mémoriser la quantité d'étiquettes qui composent un ensemble d'étiquettes ;
un dispositif d'entrée d'instructions d'impression d'historique (59) qui est adapté pour recevoir des instructions d'impression d'historique pour la réimpression en spécifiant une étiquette mémorisée dans le dispositif de mémoire d'historique (351) ;
un dispositif d'extraction d'étiquette (11) qui est adapté pour extraire un ensemble d'étiquettes auquel appartient l'étiquette spécifiée, spécifié par les instructions d'impression d'historique reçues par le dispositif d'entrée d'instructions d'impression d'historique (59) en faisant référence à un numéro compté mémorisé dans le dispositif de mémoire de numéro compté (343) et l'historique mémorisé dans le dispositif de mémoire d'historique (351) ; et
un dispositif de commande d'impression d'ensemble d'étiquettes (11) qui est adapté pour commander la lecture des données d'impression de l'ensemble d'étiquettes, les données d'impression étant extraites par le dispositif d'extraction d'étiquette (11) du dispositif de mémoire de données d'impression (352) et pour imprimer les données d'impression par le dispositif d'impression.

2. Appareil d'impression d'étiquette (1) selon la revendication 1, dans lequel le dispositif d'extraction d'étiquette (11) comprend un dispositif de détermination d'ensemble d'étiquettes (11) qui est adapté pour collecter les étiquettes ensemble, dont l'historique a été mémorisé dans l'ordre d'impression par le dispositif de mémoire d'historique (351) par ensembles de chaque quantité mémorisée dans le dispositif de mémoire de nombre compté (343), et est adapté pour déterminer chaque ensemble d'étiquettes qui a été collecté ensemble sous la forme d'un ensemble d'étiquettes ; et le dispositif d'extraction d'étiquette (11) est adapté pour extraire l'ensemble d'étiquettes auquel l'étiquette spécifiée appartient parmi les ensembles d'étiquettes déterminés par le dispositif de détermination d'ensemble d'étiquettes (11).

3. Appareil d'impression d'étiquette (1) selon la revendication 1 ou 2, comprenant en outre :
un dispositif de sélection d'impression d'objet (11) qui, si une instruction d'impression d'historique est reçue par le dispositif d'entrée d'instructions d'impression d'historique (59), est adapté pour ne sélectionner que l'impression de l'étiquette spécifiée ou l'impression de tout l'ensemble d'étiquettes auquel l'étiquette spécifiée appartient, dans lequel le dispositif d'extraction d'étiquette (11), si l'impression de la seule étiquette spécifiée est sélectionnée par le dispositif de sélection d'impression d'objet (11), est adapté pour extraire uniquement l'étiquette spécifiée et si l'impression de la totalité de l'ensemble d'étiquettes auquel l'étiquette spécifiée appartient est sélectionnée, est adapté pour extraire l'ensemble d'étiquettes auquel l'étiquette spécifiée appartient.

4. Appareil d'impression d'étiquette (1) selon l'une quelconque des revendications 1 à 3, comprenant en outre :
un dispositif de coupe (8) qui est adapté pour couper une étiquette imprimée par le dispositif d'impression, et
un dispositif de commande de coupe (11) qui est adapté pour couper les étiquettes qui composent un ensemble, en unités d'ensembles d'étiquettes au moyen du dispositif de coupe (8) lorsque l'ensemble d'étiquettes est imprimé.

5. Appareil d'impression d'étiquette selon la revendication 4, comprenant en outre :
un dispositif de sélection de coupe d'objet (11) qui est adapté pour sélectionner s'il faut couper chacune des étiquettes qui compose l'ensemble d'étiquettes imprimées par le dispositif d'impression ou pas, dans lequel le dispositif de commande de coupe (8) est adapté pour couper chaque étiquette au moyen du dispositif de coupe (8) lorsque l'impression de chaque étiquette est sélectionnée par le dispositif de sélection de coupe d'objet (11).

6. Appareil d'impression d'étiquette (1) selon l'une quelconque des revendications 1 à 5, comprenant en outre :
un dispositif de commande d'impression de marque de réimpression (11) qui est adapté pour commander le dispositif d'impression afin d'imprimer une marque indiquant une réimpression lorsqu'un historique des instructions d'impression est produit par le dispositif d'entrée d'instructions d'impression d'historique (59).

7. Programme d'impression d'étiquette enregistré dans un support d'enregistrement lisible par ordinateur, le programme, lorsqu'il fonctionne sur une imprimante réalise les étapes suivantes :
une étape de mémorisation d'historique consistant à mémoriser un historique de l'impression d'un ensemble d'étiquettes qui constituent des étiquettes séquentielles relatives ;
une étape de mémorisation de données imprimées consistant à mémoriser les données d'impression des étiquettes imprimées dont l'historique est mémorisé à l'étape de mémorisation d'historique ;
une étape de mémorisation de nombre compté consistant à mémoriser la quantité d'étiquettes qui composent l'ensemble d'étiquettes ;
une étape d'entrée d'instructions d'impression d'historique consistant à recevoir des instructions d'impression d'historique pour la réimpression en spécifiant une étiquette mémorisée à l'étape de mémorisation d'historique ;
une étape d'extraction d'étiquette consistant à extraire un ensemble d'étiquettes auquel appartient l'étiquette spécifiée, spécifiée par les instructions d'impression d'historique reçues à l'étape d'entrée d'instructions d'impression d'historique en référence à un nombre compté mémorisé à l'étape de mémorisation de nombre compté et l'historique mémorisé à l'étape de mémorisation d'historique ; et
une étape de commande d'impression d'un ensemble d'étiquettes consistant à commander la lecture des données d'impression de l'ensemble d'étiquettes qui est extrait à l'étape d'extraction d'étiquette et pour commander l'impression des données d'impression.

8. Programme d'impression d'étiquette selon la revendication 7, dans lequel l'étape d'extraction d'étiquette comprend :
une étape de détermination d'ensemble d'étiquettes consistant à collecter les étiquettes, dont l'historique a été mémorisé dans l'ordre d'impression à l'étape de mémorisation d'historique en ensembles de chaque quantité qui ont été respectivement mémorisés à l'étape de mémorisation de nombre compté et déterminer chaque ensemble d'étiquettes qui a été collecté sous la forme d'un ensemble d'étiquettes ;
et l'étape d'extraction d'étiquette extrait l'ensemble d'étiquettes auquel l'étiquette spécifiée appartient parmi les ensembles d'étiquettes déterminés à l'étape de détermination d'ensemble d'étiquettes.

9. Programme d'impression d'étiquette selon la revendication 7 ou 8, comprenant en outre :
une étape de sélection d'impression d'objet consistant à ne sélectionner que l'impression de l'étiquette spécifiée ou imprimer la totalité de l'ensemble d'étiquettes auquel l'étiquette spécifiée appartient, si un historique d'instructions d'impression est reçu à l'étape d'entrée d'instructions d'impression d'historique, dans lequel :
l'étape d'extraction d'étiquette, si l'impression est uniquement prévue pour l'étiquette spécifiée, est sélectionnée dans les objets pour l'étape de sélection d'impression, extrait uniquement l'étiquette spécifiée et si l'impression de la totalité de l'ensemble d'étiquettes auquel l'étiquette spécifiée appartient est sélectionnée à l'étape de sélection d'impression d'objets, extrait l'ensemble d'étiquettes auquel l'étiquette spécifiée appartient.

10. Programme d'impression d'étiquette selon l'une quelconque des revendications 7 à 9, comprenant en outre :
une étape de contrôle de coupe consistant à couper une étiquette imprimée à l'étape de contrôle d'impression d'ensemble d'étiquettes, et
couper les étiquettes qui composent un ensemble, en unités d'ensembles d'étiquettes lorsqu'un ensemble d'étiquettes est imprimé.

11. Programme d'impression d'étiquette selon la revendication 10, comprenant en outre :
une étape de sélection de coupe d'objet consistant à sélectionner s'il faut couper chacune des étiquettes qui composent l'ensemble d'étiquettes imprimées à l'étape de contrôle d'impression d'ensemble d'étiquettes ou pas, dans lequel l'étape de contrôle de coupe coupe chaque étiquette lorsque l'impression de chaque étiquette est sélectionnée à l'étape de sélection de coupe d'objets.

12. Programme d'impression d'étiquette selon l'une quelconque des revendications 7 à 11, comprenant en outre :
une étape de contrôle d'impression de marque de réimpression consistant à contrôler l'impression d'une marque indiquant une réimpression à l'étape de contrôle d'impression d'ensemble d'étiquettes lorsqu'un historique d'instructions d'impression est produit à l'étape d'entrée d'instructions d'impression d'historique.
